# EUROPÄISCHE PATENTANMELDUNG

(11) **EP 0 989 439 A2**
(43) Veröffentlichungstag der Anmeldung: **29.03.2000**
(21) Anmeldenummer: 99118840.0
(22) Anmeldetag: 24.09.1999
(51) Int. Cl.: G02F 1/03, G02F 1/035, G06K 15/12

(54) **Vorrichtung und Verfahren zum Beschreiben von Darstellungsmaterial mittels integriertem Wellenleiter**

(30) Priorität: 29.09.1998 DE 19844651
(71) Anmelder: Agfa-Gevaert Aktiengesellschaft, 51373 Leverkusen (DE)
(72) Erfinder: Buchmann, Frank, Dr., 07745 Jena (DE); Ehbrecht, Markus, Dr., 07546 Gera (DE); Hebenstreit, Jörk, Dr., 07639 Bad Klosterlausnitz (DE)

(57) **Zusammenfassung**

Es wird eine Vorrichtung und ein Verfahren zum Beschreiben von Darstellungsmaterial (3) mit einer Strahlungsquelle (1) zum Erzeugen einer elektromagnetischen Strahlung, die eine solche Wellenlänge hat, daß mit ihr Bildinformationen auf das Darstellungsmaterial (3) schreibbar sind, vorgeschlagen. Mit einem in einem Substratmaterial (49) integrierten Wellenleiter, der als Modulator (2) ausgestaltet ist, kann die von der Strahlungsquelle (1) erzeugte Strahlung moduliert werden. An einem Eingang (9) des Modulators (2) ist ein Modulationssignal empfangbar, das die Bildinformationen enthält. Erfindungsgemäß wird mittels eines Kompensationsmittels (6, 12) ein bei dem Modulieren der Strahlung auftretender Modulationsfehler kompensiert.

## Beschreibung

Die vorliegende Erfindung betrifft eine Vorrichtung und ein Verfahren zum Beschreiben von Darstellungsmaterial gemäß dem Oberbegriff des Anspruchs 1 bzw. des Anspruchs 29.

Eine solche Vorrichtung und ein solches Verfahren sind aus der vorveröffentlichten internationalen Patentanmeldung WO 96/25009 bekannt. Die Patentanmeldung beschreibt ein Farbbilderzeugungssystem zur Darstellung farbiger oder monochromer Bilder, insbesondere für Fernseh- oder Videoanwendungen und Druckanwendungen, wie z. B. zum Beschreiben von fotosensitivem Papier. Das bekannte Bilderzeugungssystem enthält Wellenleiter, die auf einem Träger monolithisch oder hybrid integriert sind. Diese integrierten Wellenleiter sind dabei als Modulator ausgestaltet, so daß das von den Wellenleitern geführte Licht, das Wellenlängen hat, die im sichtbaren Bereich des Spektrums liegen, mit einem Modulationssignal intensitätsmoduliert werden können. Das aus den Wellenleitern austretende, modulierte Licht wird auf eine Einrichtung zur Strahlablenkung - wie z. B. einen Polygonspiegel - gegeben, welche das modulierte Licht so auf eine fotosensitive Fläche - wie z. B. Fotopapier- ablenkt, daß diese fotosensitive Fläche zeilenweise beschrieben werden kann. In der Patentanmeldung wird u. a. offenbart, daß Licht dreier Wellenlängen, die im roten, grünen und blauen Wellenlängenbereich des sichtbaren Spektrums liegen, jeweils in einem integrierten Modulator moduliert wird und die drei modulierten Lichtstrahlungen anschließend zu einem Farbbild überlagert werden. Das bekannte Bilderzeugungssystem stellt daher einen Farbmischer dar, mit dem beliebige Farben auf der fotosensitiven Fläche erzeugbar sind. Das Substratmaterial, in dem der Farbmischer realisiert ist, ist vorzugsweise Kaliumtitanylphosphat, KTiOPO₄, (KTP). Dieses Substratmaterial ist dazu geeignet, insbesondere Strahlungen im gesamten Spektralbereich des sichtbaren Lichts einmodig zu führen.

Der aus der WO 96/25009 bekannte integriert-optische Wellenleiter wird in der Dissertation ,,Untersuchung der physikalischen Eigenschaften ionenausgetauschter optischer Wellenleiter und Wellenleiterbauelemente in KTP" von J.-P. Ruske, Physikalisch-Astronomisch-Technikwissenschaftl. Fakultät der Friedrich-Schiller-Universität Jena, näher untersucht. Darin wird insbesondere auf die Wellenleitereigenschaften hinsichtlich vorteilhaft nutzbarer oder störender Effekte eingegangen. In der Dissertation werden verschiedene Effekte untersucht, die zu einer Änderung der effektiven Brechzahl der in dem Wellenleiter geführten Moden oder zu einer Änderung der spontanen Polarisation des Substratmaterials führen. Diese Brechzahl- oder Polarisationsänderungen haben Phasenänderungen der in dem Wellenleiter geführten Strahlung zur Folge. Solche Phasenänderungen werden insbesondere durch thermische, fotorefraktive und pyroelektrische Effekte verursacht, die auf den Einfluß der optischen Leistung der in dem Wellenleiter geführten Strahlung zurückzuführen sind. Aufgrund der Absorption des Substratmaterials wird geführte Lichtenergie in Wärmeenergie umgewandelt, was eine Erwärmung des Wellenleiterbereichs zur Folge hat. Diese Erwärmung führt dann zu den erwähnten Brechzahl- und Polarisationsänderungen. Des weiteren werden Spannungen im Trägermaterial erzeugt, die aufgrund von fotoelastischen Wechselwirkungen ebenfalls die Phase der geführten Strahlung beeinflussen. Die durch den fotorefraktiven Effekt verursachten Brechzahländerungen sind auf eine direkte Lichtinduktion zurückzuführen. Der Einfluß der untersuchten Effekte auf die Wellenleitereigenschaften ist abhängig von der Höhe der geführten Strahlungsleistung. Zusammenfassend wird allerdings in der Dissertation festgestellt, daß die Brechzahl- und Phasenänderungen keine signifikanten Auswirkungen auf die Funktion der integriert-optischen Wellenleiter haben.

Ausgehend von der Lehre der WO 96/25009 liegt der vorliegenden Erfindung die Aufgabe zugrunde, eine verbesserte Darstellung von Bildinformationen auf einem Darstellungsmaterial zu ermöglichen.

Diese Aufgabe wird gemäß der technischen Lehren der Ansprüche 1 und 29 gelöst.

Die vorliegende Erfindung beruht auf der Erkenntnis, daß das Beschreiben von Darstellungsmaterial mit einem integrierten Wellenleiter, der als Modulator ausgebildet ist, besonderen Anforderungen unterliegt. Der Begriff Darstellungsmaterial umfaßt hier viele unterschiedliche Materialien, die für die Darstellung von Bildinformationen geeignet sind. Beispielhaft sollen an dieser Stelle Aufzeichnungmaterialien zur dauerhaften Darstellung der Bildinformationen, wie z. B. Fotopapier, fotografischer oder thermografischer Film oder Selentrommeln, und Projektionsmaterialien, z. B. für Fernseh- oder Videoanwendungen, genannt werden. Darstellungsmaterialien haben unterschiedliche Eigenschaften, beispielsweise haben sie eine spezielle Empfindlichkeit betreffend die absolute Energie einer Strahlung, die dazu verwendet wird, auf dem Darstellungsmaterial eine gewünschte Darstellung von Bildinformationen zu erzeugen. Bei einem Darstellungsmaterial, wie z. B. einem fotografischen Aufzeichnungsmaterial, sind die minimal und maximal erzeugbaren Dichten auf dem Aufzeichnungsmaterial durch das Aufzeichnungsmaterial selbst vorgegeben, ebenso wie die Dichteabstufungen zwischen dieser minimalen und maximalen Dichte. Die zum Beschreiben verwendete modulierte Strahlung sollte daher vorteilhafterweise an das jeweilige Darstellungsmaterial angepaßt sein.

Aufgrund der Erfindung ist es möglich, beim Modulieren der Strahlung zum Beschreiben von Darstellungsmaterial auftretende Modulationsfehler zu kompensieren oder zumindest weitgehend zu reduzieren. Dadurch können Bildinformationen vorteilhafterweise auf brillante und hochauflösende Weise auf Darstellungsmaterial dargestellt werden. Modulationsfehler können beispielsweise durch Erwärmung des Substratmaterials hervorgerufen werden. Die Modulationsfehler können aber ebenso auf andere Weise verursacht werden, beispielsweise aufgrund von unerwünschten Polarisationsdrehungen, die durch die Strahlungsquelle selbst, beim Erzeugen der elektromagnetischen Strahlung oder beim Führen der dem Modulator zuzuführenden Strahlung - z. B. in einem Lichtwellenleiter - erzeugt werden können. In jedem Fall wird durch die Modulationsfehler die Qualität der realen Darstellung der Bildinformationen auf dem Darstellungsmaterial gegenüber der gewünschten Darstellung der Bildinformationen vermindert.

In einer vorteilhaften Ausgestaltung der Erfindung wird ein Modulationsfehlersignal erzeugt, das von dem Kompensationsmittel zum Kompensieren des auftretenden Modulationsfehlers benutzt wird. Dieses Modulationsfehlersignal wird in Abhängigkeit von einem Vergleich einer Soll-Information mit einem Abbild der von dem Modulator modulierten Strahlung erzeugt. Aufgrund der Bestimmung des Modulationsfehlers ist es vorteilhafterweise möglich, eine genauere Kompensation des Modulationsfehlers durchzuführen. Die Soll-Information kann eine vorgegebene, für den Vergleich mit dem Abbild der modulierten Strahlung geeignete Information sein, die für eine optimierte Modulation charakteristisch ist. Beispielsweise kann die Soll-Information die auf das Darstellungsmaterial zu schreibende Bildinformation enthalten.

In einer weiteren vorteilhaften Ausgestaltung wird dem Kompensationsmittel ein Bildsignal zugeführt, das die Bildinformationen enthält, wobei einfachheitshalber das Kompensationsmittel das Modulationssignal in Abhängigkeit von dem Bildsignal und dem Modulationsfehlersignal erzeugt. Auf diese Weise kann das Modulationsfehlersignal, mit dem der Modulationsfehler kompensiert werden soll, direkt in dem Kompensationsmittel mit den Bildinformationen kombiniert werden, so daß der Aufwand für die Ansteuerung des Modulators mit einem Modulationssignal, das gleichzeitig die auf das Darstellungsmaterial zu schreibenden Bildinformationen und Ansteuerinformationen zur Kompensation des Modulationsfehlers enthält, gering gehalten werden kann.

In einer besonders vorteilhaften Ausgestaltung der Erfindung weist die Vorrichtung ein Auswertemittel auf, mit dem die spektrale Zusammensetzung der modulierten Strahlung ausgewertet werden kann. Damit wird es ermöglicht, unterschiedliche Fehlerursachen für die Entstehung des Modulationsfehlers, die Modulationsfehler unterschiedlicher Frequenzen erzeugen, aufzuschlüsseln. Einfachheitshalber kann die spektrale Zusammensetzung der modulierten Strahlung aufgrund einer Auswertung des Abbildes der modulierten Strahlung durchgeführt werden. Um Verzerrungen und andere Fehler bei der Auswertung der spektralen Zusammensetzung der modulierten Strahlung zu minimieren, kann das Auswertemittel vorteilhafterweise direkt zusammen mit dem Modulator in das Substratmaterial integriert werden.

Vorteilhafterweise wird die Information über die spektrale Zusammensetzung der modulierten Strahlung zur Erzeugung des Modulationsfehlersignales verwendet. Damit können wahlweise alle oder nur bestimmte Fehlerursachen, die für die Entstehung des Modulationsfehlers verantwortlich sind, direkt in das Modulationsfehlersignal eingearbeitet werden, so daß diese Fehlerursachen über eine entsprechende fehlerkorrigierte Ansteuerung des Modulators kompensiert werden können.

In einer weiteren, besonders vorteilhaften Ausgestaltung der Erfindung weist das Kompensationsmittel ein Temperaturstabilisierungsmittel auf, das auf den Modulator wirkt und zum Stabilisieren seiner Temperatur beiträgt. Dadurch wird ermöglicht, daß Modulationsfehler, die auf eine Erwärmung des Modulators zurückzuführen sind, reduziert oder ganz kompensiert werden können. Durch das Temperaturstabilisierungsmittel soll die Temperatur des Modulators auf einen für den ordnungsgemäßen Betrieb optimalen Wert eingestellt werden. Dazu kann es beispielsweise vorteilhaft sein, das Temperaturstabilisierungsmittel mit einem entsprechenden Signal anzusteuern, mit dem die Stabilisierungstemperatur für den Modulator vorgegeben wird. Für eine genauere Bestimmung dieser Stabilisierungstemperatur werden die aufgrund der Auswertung der spektralen Zusammensetzung der modulierten Strahlung bestimmten, niederfrequenten Bestandteile dieser modulierten Strahlung für die Ansteuerung des Temperaturstabilisierungsmittels herangezogen. Die obere Grenzfrequenz dieser niederfrequenten Bestandteile hängt von der Wärmediffusionsgeschwindigkeit des Substratmaterials ab, in dem der Modulator integriert ist. Dieser vorteilhaften Ausgestaltung liegt die Erkenntnis zugrunde, daß auf den Modulator wirkende Temperatureinflüsse insbesondere zu Modulationsfehlern führen, die den niederfrequenten Bestandteilen der modulierten Strahlung entnehmbar sind. Solche temperaturbedingten Modulationsfehler sind beispielsweise auf Temperaturdriften zurückzuführen, die im Sekundenbereich liegen.

Zur besonders genauen Kompensation der auf Temperatureinflüsse zurückzuführenden Modulationsfehler kann vorteilhafterweise ein Sensormittel vorgesehen sein, mit dem die Temperatur des Modulators bestimmt wird. Die so bestimmte Temperatur des Modulators kann nun für die Erzeugung des Ansteuersignales für das Temperaturstabilisierungsmittel herangezogen werden. Dadurch kann die für die ordnungsgemäße Modulation erforderliche Temperatur des Modulators noch exakter eingestellt werden. Es ist aber ebenso möglich, die mit dem Sensormittel bestimmte Temperatur des Modulators ebenfalls für die Erzeugung des Modulationsfehlersignales heranzuziehen. Auf diese Weise können aufgrund der fehlerhaften Temperatur entstehende Modulationsfehler direkt über die Ansteuerung des Modulators mit dem Modulationssignal kompensiert werden.

In einer weiteren, besonders vorteilhaften Ausgestaltung der Erfindung wird ein Abbild der nicht modulierten Strahlung erfaßt. Das zweite Erfassungsmittel zum Erfassen dieses Abbildes kann beispielsweise vor dem Modulator angeordnet sein, so daß das Abbild der Strahlung erfaßt wird, bevor die von der Strahlungsquelle erzeugte Strahlung im Modulator mit dem Modulationssignal moduliert wird. Es ist ebenso möglich, das zweite Erfassungsmittel hinter dem Modulator anzuordnen, so daß das Abbild der nicht modulierten Strahlung dann erfaßt wird, wenn der Modulator nicht in Betrieb ist, d. h. wenn die von der Strahlungsquelle erzeugte Strahlung durch den Modulator hindurchgeführt wird, ohne durch ihn moduliert zu werden. Der Modulator befindet sich dann in einem passiven Zustand. Es ist darüber hinaus vorteilhafterweise möglich, das Erfassen des Abbildes der nicht modulierten Strahlung mit dem ersten Erfassungsmittel durchzuführen, das hinter dem Modulator angeordnet ist und ansonsten zum Erfassen eines Abbildes der modulierten Strahlung vorgesehen ist. Um den technischen Aufwand zur Erfassung der Abbilder der Strahlung gering zu halten, ist es möglich, mit ein und demselben Erfassungsmittels sowohl die modulierte Strahlung im Modulationsbetrieb des Modulators als auch die nicht modulierte Strahlung im passiven Zustand des Modulators zu erfassen. Das erfaßte Abbild der nicht modulierten Strahlung ist dazu geeignet, unerwünschte Eigenschaften der Strahlung, die beim Modulieren im Modulator zu Modulationsfehlern führen würden, bereits vor der eigentlichen Modulation der Strahlung mit dem Modulationssignal festzustellen.

Das erfaßte Abbild der nicht modulierten Strahlung kann dann dem Kompensationsmittel zugeführt werden, mit dem die Strahlung verändert wird, bevor sie dem Modulator zum Modulieren mit dem Modulationssignal zugeführt wird. Dadurch kann bereits vor dem eigentlichen Modulationsvorgang die Strahlung in einen solchen Zustand gebracht werden, daß beim Modulieren auftetende Modulationsfehler vermieden werden. Zusätzlich oder alternativ ist es auch möglich, das dem Kompensationsmittel zugeführte Abbild der nicht modulierten Strahlung zum Erzeugen des Modulationssignals zu verwenden, um dadurch die Modulationsfehler durch eine entsprechende direkte Ansteuerung des Modulators mit einem geeigneten Modulationssignal zu kompensieren oder zumindest zu reduzieren. Vorteilhafterweise kann mit einem Polarisationsmittel die Polarisation der Strahlung, bevor sie dem Modulator zum Modulieren zugeführt wird, eingestellt werden. Dies ist insbesondere dann sinnvoll, wenn die Polarisationsrichtung der dem Modulator zugeführten Strahlung nicht derjenigen Polarisationsrichtung entspricht, auf die der Modulator eingestellt ist, um den größtmöglich einstellbaren Modulationsumfang zwischen einem Intensitätsmaximum und einer Auslöschung der modulierten Strahlung zu erreichen.

Weitere vorteilhafte Ausgestaltungen der Erfindung sind den abhängigen Ansprüchen zu entnehmen.

Im folgenden werden die Erfindung und ihre Vorteile anhand von Ausführungsbeispielen beschrieben.

Es zeigen:
- Fig. 1: ein erstes Ausführungsbeispiel einer erfindungsgemäßen Vorrichtung mit einem Temperaturstabilisator,
- Fig. 2: ein zweites Ausführungsbeispiel mit einer Auswertung und Regelung der modulierten Strahlung,
- Fig. 3: ein drittes Ausführungsbeispiel mit einer Auswertung und Regelung der modulierten Strahlung und einer zusätzlichen Temperaturstabilisation,
- Fig. 4: ein viertes Ausführungsbeispiel mit einer Auswertung der nicht modulierten Strahlung,
- Fig. 5: ein fünftes Ausführungsbeispiel mit einem Polarisator zum Einstellen der Polarisation der zu modulierenden Strahlung,
- Fig. 6: ein Ausführungsbeispiel eines erfindungsgemäßen Modulators als Mach-Zehnder-lnterferometer mit zwei Auskoppelmitteln zum Auskoppeln der modulierten und nicht modulierten Strahlung,
- Fig. 7: ein Ausführungsbeispiel eines Drei-Farbenmischers mit drei Auskoppelmitteln zum Auskoppeln der modulierten Strahlungen in den drei Farben und
- Fig. 8: ein sechstes Ausführungsbeispiel der erfindungsgemäßen Vorrichtung mit einem Temperaturstabilisator.

Im folgenden werden für gleiche und gleich wirkende Elemente durchweg gleiche Bezugszeichen verwendet.

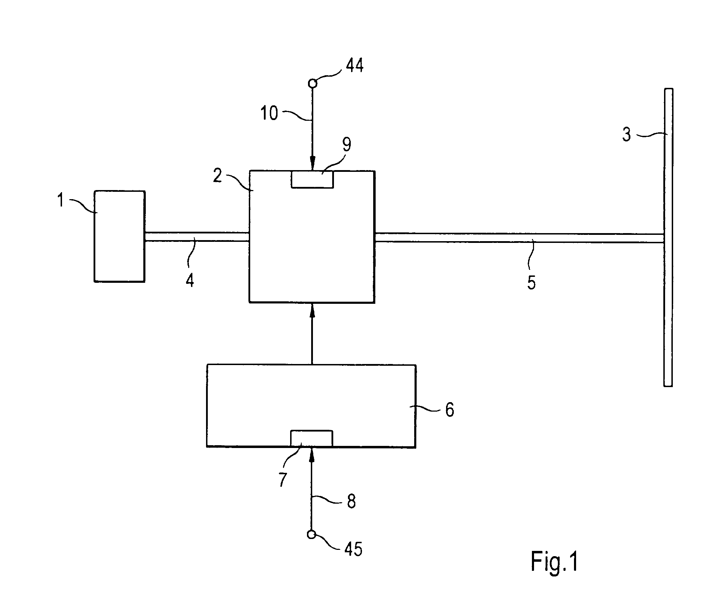

Fig. 1 zeigt das erste Ausführungsbeispiel einer erfindungsgemäßen Vorrichtung zum Beschreiben von Darstellungsmaterial, das hier ein fotografisches Aufzeichnungsmaterial ist. Eine solche erfindungsgemäße Vorrichtung kann insbesondere in einem digitalen Fotoprinter zum Erzeugen von Fotos auf Fotopapier eingesetzt werden. In diesem Fall entspricht das Fotopapier dem fotografischen Aufzeichnungsmaterial. Es ist aber ebenso möglich, die erfindungsgemäße Vorrichtung zum Belichten von fotografischem Film einzusetzen, beispielsweise für medizinische Anwendungen. In diesem Fall kann beispielsweise ein Röntgenfilm mit Bildinformationen beschrieben werden.

Die Fig. 1 zeigt eine Schreibvorrichtung zum Beschreiben von Fotopapier 3. Die Schreibvorrichtung enthält einen Laser 1, der hier als Strahlungsquelle zum Erzeugen einer Laserstrahlung dient, deren Wellenlänge im sichtbaren Bereich des Spektrums liegt. Die Empfindlichkeit des Fotopapiers 3 und die Wellenlänge des Lasers 1 müssen in gewisser Weise aufeinander abgestimmt sein, so daß die Laserstrahlung in der Lage ist, in dem Fotopapier 3 chemische Reaktionen hervorzurufen, so daß Bildinformationen auf dem Fotopapier 3 darstellbar sind. Abhängig von der Art und Empfindlichkeit des zu beschreibenden Darstellungsmaterials ist es ebenso möglich, eine Laserquelle oder eine anders geartete Strahlungsquelle zu verwenden, die eine im infraroten Bereich des Spektrums liegende Strahlung erzeugt. Der Laser 1 der Schreibvorrichtung emittiert hier einfachheitshalber eine einmodige Strahlung, die ihr Intensitätsmaximim im sichtbaren Bereich des Spektrums hat. Es ist allerdings klar, daß zur Erzeugung von Farbbildern auf dem Fotopapier 3 drei Strahlungen überlagert werden können, die Wellenlängen im roten, grünen und blauen Bereich des Spektrums haben. Zur einfacheren Darstellung der Erfindung wurde allerdings bei der Beschreibung der folgenden Ausführungsbeispiele auf diese Überlagerung mehrerer Strahlen verzichtet.

Die erfindungsgemäße Schreibvorrichtung enthält einen Modulator 2, der zwischen dem Laser 1 und dem Fotopapier 3 angeordnet ist. Dieser Modulator 2 ist hier ein in einem Substratmaterial auf Basis von Kaliumtitanylphospht, KTP, integrierter Wellenleiter, wie er bereits aus der Patentanmeldung WO 96/25009 bekannt ist. Mit dem Modulator 2 kann die von dem Laser 1 emittierte Strahlung mit einem Modulationssignal moduliert werden. Dieses Modulationssignal wird an einem Eingang 44 der Schreibvorrichtung eingespeist und dem Modulator 2 an einem Eingang 9 über eine Modulationssignalverbindung 10 zwischen dem Eingang 44 und dem Eingang 9 zugeführt. Das Modulationssignal enthält die Bildinformationen, die auf dem Fotopapier 3 dargestellt werden sollen. Das Modulationssignal ist hier ein analoges Signal. Eine von dem Laser 1 emittierte Laserstrahlung 4 wird daher unmoduliert dem Modulator 2 zugeführt. Die Laserstrahlung 4 wird daraufhin in dem Modulator 2 mit dem Modulationssignal moduliert. An einem Ausgang des Modulators 2 wird eine modulierte Laserstrahlung 5 ausgegeben und auf das Fotopapier 3 gerichtet.

Um die gesamte Bildinformation auf dem Fotopapier 3 darstellen zu können, muß zwischen dem Fotopapier 3 und dem modulierten Laserstrahl 5 eine Relativbewegung stattfinden. Zwischen dem Modulator 2 und dem Fotopapier 3 muß daher eine Einrichtung zur Strahlablenkung vorgesehen sein, die in der Fig. 1 und den nachfolgenden Figuren einfachheitshalber nicht dargestellt ist. Eine solche Einrichtung zum Ablenken des modulierten Laserstrahles 5 kann beispielsweise ein Polygonspiegel sein, wie er auch bereits in der internationalen Patentanmeldung WO 96/25009 beschrieben ist. Es ist auch möglich, den modulierten Laserstrahl 5 in einem Lichtwellenleiter von dem Modulator 2 zu dem Fotopapier 3 zu führen und zwischen dem Lichtwellenleiter und dem Fotopapier 3 eine solche Relativbewegung zu erzeugen, wie sie für das Beschreiben des Fotopapiers 3 mit der Bildinformation notwendig ist.

Die erfindungsgemäße Schreibvorrichtung gemäß der Fig. 1 weist weiterhin ein Kompensationsmittel 6 auf, das hier als Temperaturstabilisator ausgestaltet ist. Dieser Temperaturstabilisator 6 kann beispielsweise ein Peltier-Element sein. Der Temperaturstabilisator 6 wirkt auf den Modulator 2 ein, um die Arbeitstemperatur des Modulators 2 zu stabilisieren. Beim Betrieb des Modulators 2 treten Temperaturschwankungen auf, die zu Modulationsfehlern führen, durch die die Bildinformation in ihrer Darstellung auf dem Fotopapier 3 verfälscht wird. Um solche Modulationsfehler zu verhindern oder zumindest zu reduzieren, wird mittels des Temperaturstabilisators 6 die Betriebstemperatur des Modulators 2 stabilisiert, um diese Betriebstemperatur möglichst auf einen Wert einzustellen, der für die Modulation optimal ist. Der Temperaturstabilisator 6 weist hier einen Eingang 7 auf, an dem der Temperaturstabilisator 6 ein Ansteuersignal empfängt, mit dem eine Temperatur vorgegeben werden kann, auf die der Modulator 2 stabilisiert werden soll. Dieses Ansteuersignal wird der Schreibvorrichtung an einem Eingang 45 eingespeißt und dem Eingang 7 des Temperaturstabilisators 6 über eine Ansteuersignalverbindung 8 zugeleitet.

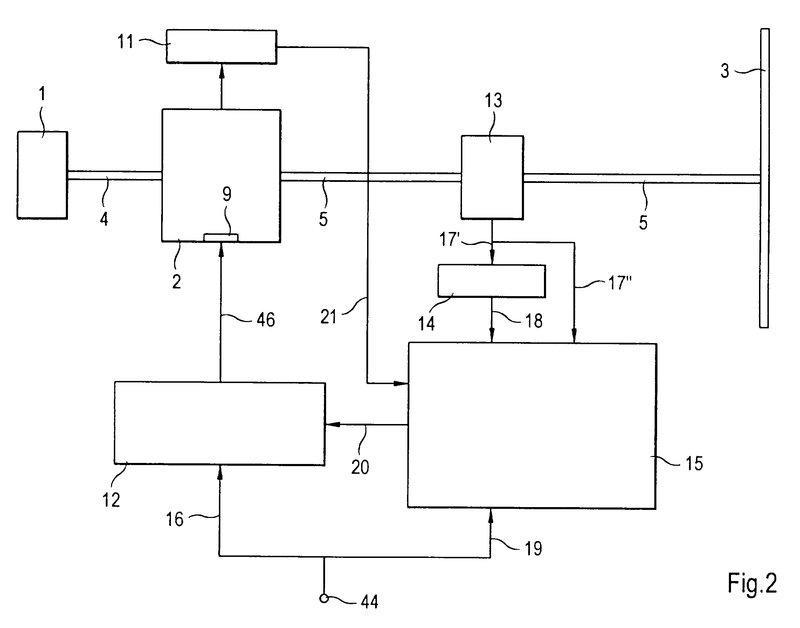

Fig. 2 beschreibt das zweite Ausführungsbeispiel der erfindungsgemäßen Vorrichtung mit einer Auswertung und Regelung der modulierten Strahlung. Die erfindungsgemäße Schreibvorrichtung gemäß der Fig. 2 weist hier neben dem Laser 1, dem Modulator 2 und dem Fotopapier 3 ein Erfassungsmittel 13 auf, das in dem Strahlengang der modulierten Strahlung zwischen dem Modulator 2 und dem Fotopapier 3 angeordnet ist. Mit dem Erfassungsmittel 13 wird ein Abbild der durch den Modulator 2 modulierten Strahlung 5 erfaßt. Das Erfassungsmittel 13 kann beispielsweise als Fotodetektor ausgestaltet sein, der ein der modulierten Strahlung 5 entsprechendes elektrisches Signal erzeugt. Zur Erfassung des Abbildes der modulierten Strahlung kann das Erfassungsmittel 13 einen Strahlenteiler aufweisen, der einen geringen Teil der modulierten Strahlung aus dem normalen Strahlengang für das Beschreiben des Fotopapiers 3 abzweigt. Für ein solches Auskoppeln eines geringen Teils der modulierten Strahlung kann ebenso ein Spiegel oder ein Prisma vorgesehen sein. Diese Mittel zum Auskoppeln eines Teils der modulierten Strahlung können direkt in das Substratmaterial integriert sein, das zur integrierten Realisierung des Modulators verwendet wird. Es ist auch möglich, einen sogenannten Y-Koppler, wie er aus der Patentanmeldung WO 96/25009 bekannt ist, in das Substratmaterial zu integrieren, um den geringen Teil der modulierten Strahlung auszukoppeln. Zur besseren Erfassung und Führung des ausgekoppelten Abbildes der modulierten Strahlung kann das Erfassungsmittel 13 über einen optischen Lichtwellenleiter direkt an das Substratmaterial gekoppelt sein.

Das von dem Erfassungsmittel 13 erfaßte Abbild der modulierten Strahlung 5 wird anschließend einem Auswertemittel 14 zugeführt, mit dem die modulierte Strahlung 5 hinsichtlich ihrer spektralen Zusammensetzung ausgewertet werden kann. Dazu ist das Auswertemittel 14 mit dem Erfassungsmittel 13 über eine Verbindung 17' verbunden, über die ein Signal mit dem erfaßten Abbild der modulierten Strahlung 5 übertragen werden kann. Das Auswertemittel 14 ist weiterhin mit einem Erzeugungsmittel 15 über eine Verbindung 18 verbunden, über die ein Informationssignal mit Angaben über die spektrale Zusammensetzung der modulierten Spannung 5 an das Erzeugungsmittel 15 übermittelt werden kann.

Das Erfassungsmittel 13 ist darüber hinaus über eine Verbindung 17" mit dem Erzeugungsmittel 15 verbunden. Über diese Verbindung 17" kann dem Erzeugungsmittel ebenfalls das Abbild der modulierten Strahlung 5 zugeführt werden.

Über eine Verbindung 19 ist das Erzeugungsmittel 15 mit dem Eingang 44 der Schreibvorrichtung verbunden. An diesem Eingang 44 wird ein Bildsignal eingespeist, das diejenigen Bildinformationen enthält, die von der Schreibvorrichtung auf das Fotopapier 3 zu schreiben sind.

Die Schreibvorrichtung gemäß der Fig. 2 weist weiterhin einen Temperatursensor 11 auf, der mit dem Modulator 2 in Verbindung steht und die Betriebstemperatur des Modulators messen kann. Über eine Verbindung 21 ist dieser Temperatursensor 11 mit dem Erzeugungsmittel 15 verbunden, um diesem eine Information über die augenblickliche Betriebstemperatur des Modulators 2 zukommen zu lassen.

Mit den Informationen über das erfaßte Abbild der modulierten Strahlung 5, deren spektraler Zusammensetzung, der augenblicklichen Betriebstemperatur des Modulators 2 und der Bildinformationen kann das Erzeugungsmittel 15 nun den Modulationsfehler bestimmen, der die Modulation des Laserstrahls in dem Modulator 2 unerwünscht beeinflußt. Zur Bestimmung dieses Modulationsfehlers wird insbesondere das über die Verbindung 17" zugeführte Abbild des modulierten Laserstrahls 5 mit der über die Verbindung 19 zugeführten Bildinformation verglichen. Diese Bildinformation stellt daher hier eine Soll-Information dar. Das Ergebnis dieses Vergleichs gibt mit einer gewissen Genauigkeit den Modulationsfehler an. Der Modulationsfehler kann allerdings noch genauer festgestellt werden, wenn auch die von dem Temperatursensor 11 bestimmte Temperatur berücksichtigt wird. Wie bereits oben beschrieben, werden durch Schwankungen der Betriebstemperatur des Modulators 2 Modulationsfehler erzeugt. Weicht daher die von dem Temperatursensor 11 bestimmte Betriebstemperatur von einer vorgegebenen, optimalen Betriebstemperatur des Modulators ab, so kann daraus gefolgert werden, daß die vorgenommene Modulation in einer bestimmten Art und Weise verfälscht wird. Die Berücksichtigung der augenblicklichen Betriebstemperatur des Modulators 2 bei der Bestimmung des Modulationsfehler kann daher eine noch genauere Kompensation oder Reduzierung des Modulationsfehlers bewirken. Auswirkungen der Schwankungen der Betriebstemperatur des Modulators 2 auf die Modulation können ebenfalls über die Analyse der spektralen Zusammensetzung des modulierten Laserstrahles 5 hergeleitet werden. Insbesondere die niederfrequenten Bestandteile der modulierten Strahlung geben Modulationsfehler an, die auf unerwünschte, auf den Modulator einwirkende Temperatureinflüsse zurückzuführen sind. Der Bereich des Spektrums, in dem diese niederfrequenten Bestandteile der modulierten Strahlung auftritt, hängt von dem Substratmaterial ab, in dem der Modulator 2 realisiert ist. Die obere Grenzfrequenz des niederfrequenten Bereichs hängt von der Wärmediffusionsgeschwindigkeit des Substratmaterials ab. Die Auswertung und Berücksichtigung dieser niederfrequenten Bestandteile der modulierten Strahlung bei der Erzeugung des Modulationsfehlers kann daher ebenfalls zu einer verbesserten Bestimmung des Modulationsfehlers und daher zu einer genaueren Kompensation oder Reduzierung des Modulationsfehlers beitragen. Das Erzeugungsmittel 15 erzeugt daher ein Modulationsfehlersignal, das den Modulationsfehler angibt und das einem Kompensationsmittel 12 über eine Verbindung 20, die zwischen dem Erzeugungsmittel 15 und dem Kompensationsmittel 12 besteht, zugeführt wird.

Zwischen dem Kompensationsmittel 12 und dem Eingang 44 zum Einspeisen des Bildsignales besteht eine Verbindung 16, über die dem Kompensationsmittel 12 das Bildsignal mit der Bildinformation zugeführt wird. Das Kompensationsmittel 12 erzeugt nun das Modulationssignal, mit dem die von dem Laser 1 emittierte Laserstrahlung 4 im Modulator 2 moduliert werden soll. Dazu ist das Kompensationsmittel 12 über eine Verbindung 46 mit dem Eingang 9 des Modulators 2 verbunden. In dem Kompensationsmittel 12 wird das Bildsignal mit den Bildinformationen in geeigneter Weise mit dem Modulationsfehlersignal überlagert. Dabei kann eine geeignete Anpassung und Wichtung der beiden zu überlagernden Signale erfolgen.

Die beschriebene Auswertung und Regelung der modulierten Strahlung muß in "Echtzeit" erfolgen. Das bedeutet, daß im wesentlichen diejenige Zeit für die Regelung zur Verfügung steht, die benötigt wird, um einen Punkt des Fotopapiers 3 zu beschreiben.

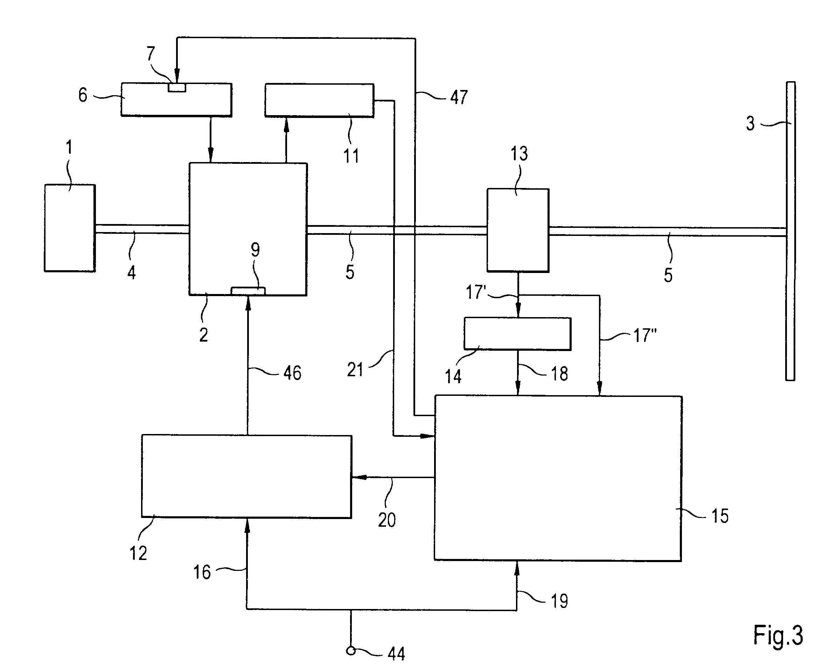

Die Fig.3 zeigt das dritte Ausführungsbeispiel der erfindungsgemäßen Schreibvorrichtung zum Beschreiben des Fotopapiers3. Zusätzlich zu der Schreibvorrichtung, wie sie anhand der Fig. 2 beschrieben wurde, weist die Schreibvorrichtung gemäß der Fig. 3 den Temperaturstabilisator 6 auf, der bereits im Zusammenhang mit der erfindungsgemäßen Schreibvorrichtung gemäß der Fig. 1 bechrieben wurde. Dieser Temperaturstabilisator 6 steht mit dem Modulator 2 in Verbindung, so daß dessen Betriebstemperatur mit dem Temperaturstabilisator 6 eingestellt werden kann. Der Eingang 7 des Temperaturstabilisators 6 ist über eine Verbindung 47 mit dem Erzeugungsmittel 15 verbunden. Über diese Verbindung 47 kann der Temperaturstabilisator 6 an dem Eingang 7 das Ansteuersignal empfangen, mit dem eine Temperatur vorgegeben werden kann, auf die der Modulator 2 im Betrieb eingestellt werden soll. Das Ansteuersignal wird in dem Erzeugungsmittel 15 in Abhängigkeit von derjenigen Temperatur erzeugt, die von dem Temperatursensor 11 an dem Modulator 2 gemessen wird. Für eine noch genauere Festlegung der Temperatur, auf die der Modulator 2 über den Temperaturstabilisator 6 eingestellt werden soll, können in dem Erzeugungsmittel 15 zur Erzeugung des Ansteuersignales, zusätzlich zu der von dem Temperatursensor 11 festgestellten Temperatur, ebenfalls Angaben über die niederfrequenten Bestandteile des modulierten Laserstrahles 5 verwendet werden. Diese niederfrequenten Anteile werden durch das Auswertemittel 14 festgestellt und geben Modulationsfehler an, die insbesondere auf unerwünschte Temperatureinflüsse auf den Modulator 2 zurückzuführen sind.

Die Schreibvorrichtung gemäß der Fig. 3 weist daher zwei Mittel auf, die zur Kompensation von Modulationsfehlern beitragen: Eine solche Kompensation erfolgt zum einen über den Temperaturstabilisator 6 und zum anderen über eine geeignete Erzeugung des Modulationssignales zum Modulieren der Laserstrahlung 4. Dieses geeignete Modulationssignal wird - wie oben beschrieben - in dem Kompensationsmittel 12 durch eine entsprechende Kombination des Bildsignales und des Modulationsfehlersignales erzeugt.

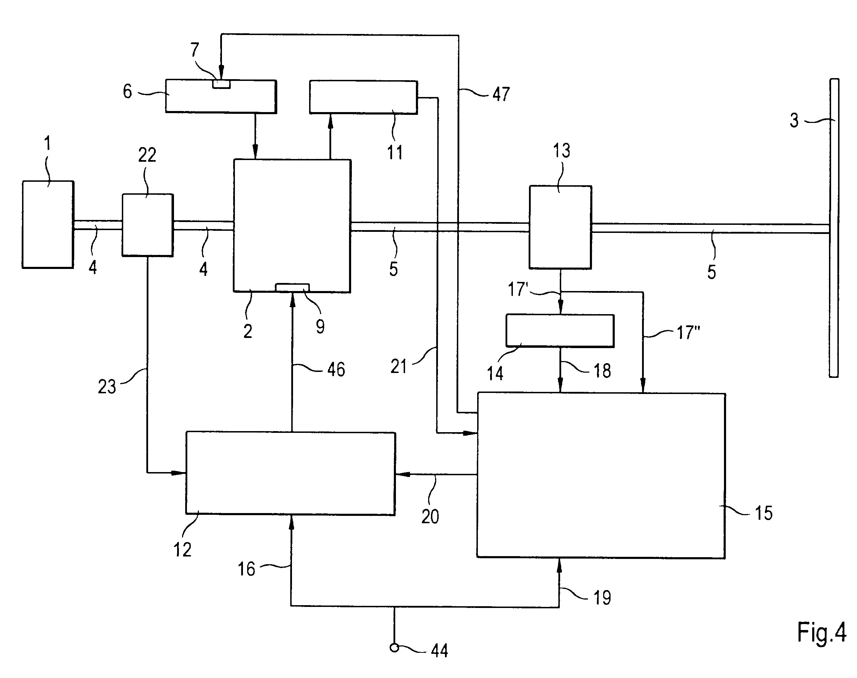

Die Fig.4 zeigt das vierte Ausführungsbeispiel der erfindungsgemäßen Schreibvorrichtung, mit der zusätzlich eine Auswertung der nicht modulierten Strahlung 4 für die Kompensation der Modulationsfehler vorgenommen wird. Dazu weist die erfindungsgemäße Schreibvorrichtung gemäß der Fig. 4 zusätzlich zu den Komponenten der bereits im Zusammenhang mit Fig. 3 beschriebenen Schreibvorrichtung ein weiteres Erfassungsmittel 22 auf, das in dem Strahlengang der nicht modulierten Laserstrahlung zwischen dem Laser 1 und dem Modulator 2 angeordnet ist. Mit diesem weiteren Erfassungsmittel 22 kann ein Abbild der nicht modulierten Laserstrahlung 4 erfaßt werden. Das weitere Erfassungsmittel 22 kann ebenso ausgestaltet sein, wie das im Zusammenhang mit Fig. 2 beschriebene Erfassungsmittel 13 zum Erfassen eines Abbildes der modulierten Laserstrahlung 5. Das weitere Erfassungsmittel 22 ist über eine Verbindung 23 mit dem Kompensationsmittel 12 verbunden. Über diese Verbindung 23 kann das erfaßte Abbild der nicht modulierten Strahlung 4 von dem weiteren Erfassungsmittel 22 zu dem Kompensationsmittel 12 übermittelt werden. Das Abbild der nicht modulierten Strahlung 4 wird in dem Kompensationsmittel 12 ausgewertet und beurteilt. Dadurch können Eigenschaften der nicht modulierten Strahlung 4 festgestellt werden, die für eine ordnungsgemäße Modulation mit dem Modulator 2 nicht optimal geeignet sind oder auf sonstige Weise zu Modulationsfehlern beim Modulieren dieser nicht modulierten Laserstrahlung 4 führen. Diese unerwünschten Eigenschaften der nicht modulierten Strahlung 4 werden daher in dem Kompensationsmittel 12 festgestellt und können nun in geeigneter Weise bei der Erzeugung des Modulationssignales berücksichtigt werden. Das dem Modulator 2 über die Verbindung 46 von dem Kompensationsmittel 12 zugeführte Modulationssignal wird daher in diesem Ausführungsbeispiel in Abhängigkeit von dem Bildsignal, dem Modulationsfehlersignal und dem Abbild der nicht modulierten Strahlung 4 erzeugt. Die nicht modulierte Strahlung 4 wird in dem Modulator 2 so moduliert, daß die zuvor festgestellten Eigenschaften dieser nicht modulierten Strahlung 4 im wesentlichen nicht zu Modulationsfehlern führen.

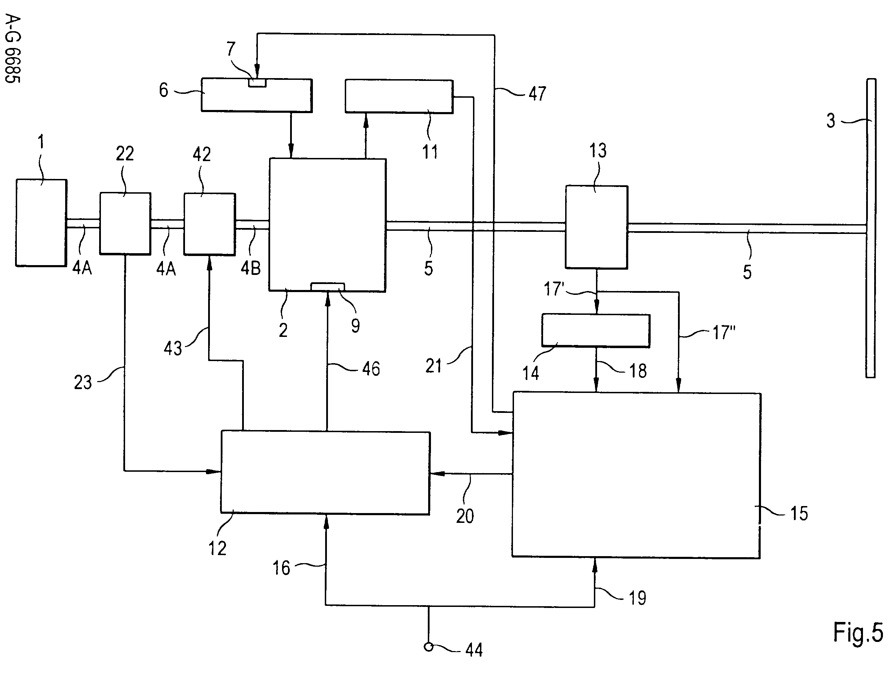

Die Fig. 5 zeigt ein fünftes Ausführungsbeispiel der erfindungsgemäßen Vorrichtung zum Beschreiben des Fotopapiers 3. Diese erfindungsgemäße Schreibvorrichtung enthält zusätzlich zu den Komponenten der anhand der Fig. 4 beschriebenen Schreibvorrichtung ein Änderungsmittel 42 zum Ändern der Eigenschaften der nicht modulierten Strahlung. Dieses Änderungsmittel 42 ist im vorliegenden Ausführungsbeispiel gemäß der Fig. 5 ein Polarisator zum Einstellen der Polarisation der dem Modulator2 zuführbaren Laserstrahlung. Dies bedeutet, daß mittels des Polarisators 42 die Polarisationsrichtung einer nicht modulierten Strahlung 4A, die von dem Laser 1 emittiert wird, verändert wird. Der Polarisator 42 ist in dem Strahlengang der nicht modulierten Strahlung 4A zwischen dem weiteren Erfassungsmittel 22 und dem Modulator 2 angeordnet.

Wie bereits anhand der Fig. 4 beschrieben, wird durch das weitere Erfassungsmittel 22 ein Abbild der nicht modulierten Strahlung 4A erfaßt und über die Verbindung 23 dem Kompensationsmittel 12 zugeleitet. Das erfaßte Abbild wird in dem Kompensationsmittel 12 nach vorgegebenen Kriterien, die unerwünschte Eigenschaften der zu modulierenden Laserstrahlung angeben, ausgewertet. Im vorliegenden, fünften Ausführungsbeispiel wird das Abbild der nicht modulierten Laserstrahlung insbesondere auf die Polarisationsrichtung der nicht modulierten Strahlung 4A untersucht. Für eine optimale Modulation der Laserstrahlung wird durch den Modulator 2 eine bestimmte Polarisationsrichtung der zu modulierenden Strahlung bevorzugt. Weicht nun die bei der Auswertung des Abbildes der nicht modulierten Strahlung 4A in dem Kompensationsmittel 12 festgestellte Polarisationsrichtung der nicht modulierten Strahlung 4A von dieser von dem Modulator 2 bevorzugten Polarisationsrichtung ab, so wird eine entsprechende Information von dem Kompensationsmittel 12 an den Polarisator 42 übermittelt. Dazu ist das Kompensationsmittel 12 über eine Verbindung 43 mit dem Polarisator 42 verbunden. Über die Verbindung 43 empfängt der Polarisator 42 ein Ansteuersignal mit einer Vorgabe, wie die Polarisationsrichtung der nicht modulierten Strahlung 4A zu verändern ist. An einem Ausgang des Polarisators 42 gibt dieser nun eine nicht modulierte Strahlung 4B aus, die in ihrer Polarisationsrichtung verändert wurde und nun dem Modulator 2 zugeführt wird.

Anstelle der Veränderung der Polarisation der nicht modulierten Laserstrahlung 4A ist es ebenso möglich, andere Eigenschaften dieser Laserstrahlung vor Durchführung der eigentlichen Modulation zu ändern. Beispielsweise könnte die Intensität der nicht modulierten Strahlung angepaßt werden, indem ein steuerbarer Verstärker zwischen Erfassungsmittel 22 und Modulator 2 angeordnet wird.

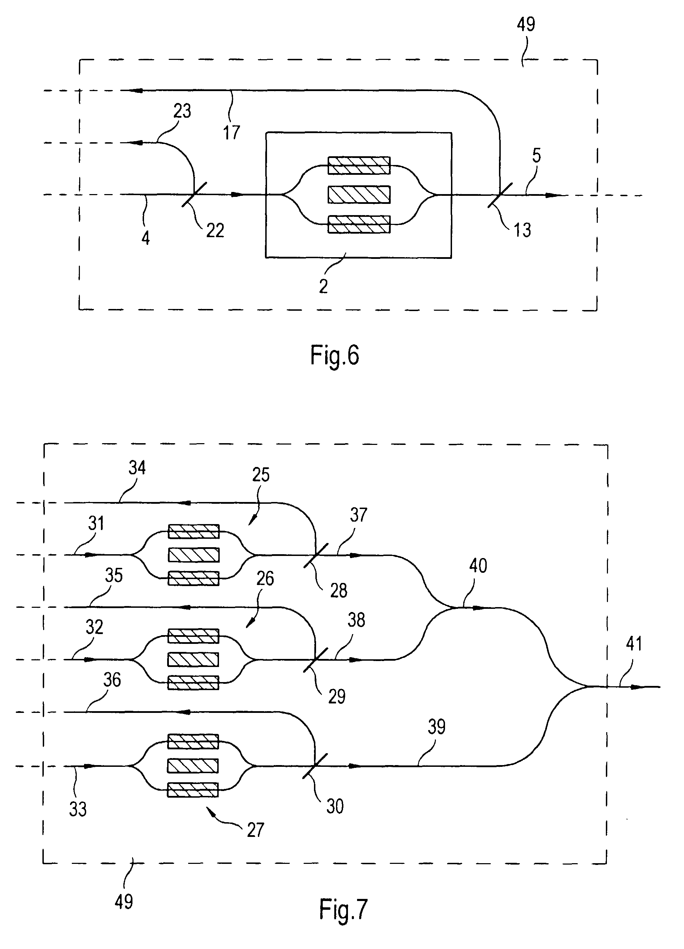

Die Fig. 6 zeigt ein Ausführungsbeispiel eines Modulators 2, der als ein Ein-Farbenmodulator für die Modulation einer einzigen Strahlung ausgestaltet ist. Der Modulator 2 gemäß der Fig. 6 ist ein sogenanntes Mach-Zehnder-lnterferometer, wie es bereits aus der internationalen Patentanmeldung WO 96/25009 prinzipiell bekannt ist. Der Modulator 2 ist in einem Substratmaterial 49 integriert, das als Basismaterial Kaliumtitanylphosphat, KTP, enthält. Vor und hinter dem Modulator 2 sind die Erfassungsmittel 22 bzw. 13 angeordnet. Diese beiden Erfassungsmittel 22 und 13 sind hier als teildurchlässige Spiegel realisiert, die einen Teil des nicht modulierten Laserstrahls 4 über die Verbindung 23 bzw. einen Teil der modulierten Laserstrahlung 5 über eine Verbindung 17 aus dem Substratmaterial 40 auskoppeln. Die beiden teildurchlässigen Spiegel 22 und 13 sind ebenfalls in das Substratmaterial 49 integriert. Dadurch kann eine besonders kompakte Anordnung erhalten werden. Des weiteren sind Verluste beim Auskoppeln und Führen der Laserstrahlung gering.

Die Fig. 7 zeigt ein Ausführungsbeispiel eines Drei-Farbenmischers 24 zum Überlagern und Mischen von drei Strahlungen, des roten, grünen und blauen Bereichs des Spektrums. Ein solcher Drei-Farbenmischer ist prinzipiell ebenfalls bereits aus der Patentanmeldung WO 96/25009 bekannt. Er weist drei Mach-Zehnder-lnterferometer auf, von denen.das erste Interferometer 25 für die Modulation der über den Wellenleiter 31 einkoppelbaren roten Laserstrahlung, das zweite Interferometer 26 für die Modulation der über den Wellenleiter 32 einkoppelbaren grünen Laserstrahlung und das dritte Interferometer 27 für die Modulation der über den Wellenleiter 33 einkoppelbaren blauen Laserstrahlung vorgesehen ist. Am Ausgang des ersten Interferometers 25 ist hier ein teildurchlässiger Spiegel 28 zum Auskoppeln eines Teils der modulierten roten Laserstrahlung über eine Verbindung 34 angeordnet. Entsprechendes gilt für die Ausgänge des zweiten und dritten Interferometers 26 bzw. 27, an deren Ausgängen jeweils ein teildurchlässiger Spiegel 29 bzw. 30 angebracht ist, die zum Auskoppeln eines Teils der grünen Laserstrahlung über eine Verbindung 35 bzw. zum Auskoppeln eines Teils der blauen Laserstrahlung über eine Verbindung 36 vorgesehen sind. Über eine Verbindung (Wellenleiter) 37 wird die von dem Spiegel 28 durchgelassene, modulierte rote Laserstrahlung mit der von dem Spiegel 29 durchgelassenen grünen Laserstrahlung überlagert, die über eine Verbindung 38 geführt wird. Die überlagerte rot-grüne Laserstrahlung kann nun über eine Verbindung 40 mit der von dem Spiegel 30 durchgelassenen blauen Laserstrahlung überlagert werden. Über eine Verbindung 41 kann nun die in den drei Farben überlagerte, modulierte Laserstrahlung weitergeführt werden. Sowohl die Komponenten der drei Mach-Zehnder-lnterferometer 25, 26 und 27 als auch die drei teildurchlässigen Spiegel 28, 29 und 30 sind zusammen mit den verschiedenen Verbindungen (Wellenleitern) in dem Substratmaterial 49 integriert.

In dem Drei-Farbenmischer 24 gemäß der Fig. 7 wurde auf die Darstellung von drei weiteren teildurchlässigen Spiegeln, die jeweils vor den drei Mach-Zehnder-Interferometern 25, 26 und 27 angebracht sein können und als Erfassungsmittel zum Erfassen von Abbildern der nicht modulierten roten, grünen bzw. blauen Laserstrahlung dienen, einfachheitshalber verzichtet.

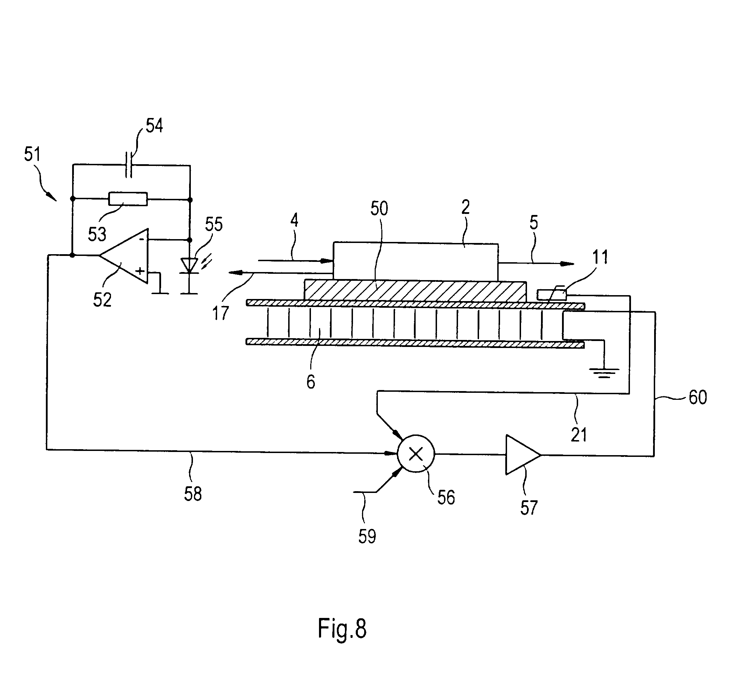

Die Fig.8 zeigt ein sechstes Ausführungsbeispiel der erfindungsgemäßen Schreibvorrichtung mit einem Temperaturstabilisator 6. Dieser Temperaturstabilisator 6 ist hier als Peltier-Element ausgeführt und über eine als Wärmestromverteiler dienende Kupferplatte 50 an den Modulator2 angekoppelt. Auf diese Weise kann die durch das Peltier-Element 6 erzeugte Temperatur einfach und effektiv an den Modulator 2 weiter übertragen werden. In der Nähe des Modulators ist der Temperatursensor 11 angebracht, der die Betriebstemperatur des Modulators 2 bestimmt. Der Temperatursensor 11 ist über die Verbindung 21 mit einer Regelstufe 56 verbunden. Auf diese Weise kann der Regelstufe 26 eine Information über die von dem Temperatursensor 11 bestimmte Temperatur übermittelt werden.

Die Fig. 8 zeigt weiterhin die Verbindung 17, die für die Zuführung des erfaßten Abbildes der durch den Modulator 2 modulierten Laserstrahlung 5 zu einer Fotodiode 55 vorgesehen ist. Diese Fotodiode 55 wandelt das optische Abbild der modulierten Laserstrahlung 5 in ein elektrisches Signal. Dieses elektrische Abbild der modulierten Laserstrahlung wird anschließend in einem Drift-Integrator 51, der als Auswertemittel für die Auswertung der spektralen Zusammensetzung der modulierten Laserstrahlung dient, integriert. Der Drift-Integrator 51 enthält einen Operationsverstärker 52, dessen invertierender Eingang mit der Anode der Fotodiode verbunden ist. Der nicht invertierende Eingang des Operationsverstärkers 52 und die Kathode der Fotodiode 55 sind auf Masse gelegt. Der Drift-Integrator weist weiterhin eine Parallelschaltung aus einem ohm'schen Widerstand 53 und einem Kondensator 54 auf. Diese Parallelschaltung bildet einen Rückkoppelzweig des Ausgangs des Operationsverstärkers 52 zu seinem invertierenden Eingang. Das von dem Drift-Integrator 51 erzeugte Signal stellt ein Niederfrequenzsignal dar, mit dem die niederfrequenten Bestandteile des Abbildes der modulierten Laserstrahlung 5 erfaßt werden. Diese niederfrequenten Bestandteile sind -wie bereits oben beschrieben - charakteristisch für Modulationsfehler, die aufgrund von unerwünschten Temperatureinflüssen auf den Modulator 2 entstehen. Das für diese unerwünschten Temperatureinflüsse charakteristische Niederfrequenzsignal wird über eine Verbindung 58, die zwischen dem Ausgang des Operationsverstärkers 52 und der Regelstufe 56 besteht, der Regelstufe 56 zugeführt. Diese Regelstufe 56 enthält weiterhin einen Eingang, an dem sie über eine Verbindung 59 ein Soll-Signal für eine erwünschte Modulatortemperatur empfangen kann. Ein Ausgang der Regelstufe 56 ist über einen Leistungsverstärker 57 mit dem Peltier-Element 6 verbunden. Die Regelstufe 56 erzeugt ein Ansteuersignal mit einer Vorgabe für eine über das Peltier-Element 6 einzustellende Temperatur des Modulators 2. Dieses Ansteuersignal wird über die Verbindung 60 dem Peltier-Element 6 zugeführt.

Mit der in der Fig. 8 beschriebenen Vorrichtung kann auf einfache und zuverlässige Weise eine Stabilisierung der Betriebstemperatur des Modulators 2 erreicht werden. Dadurch werden Modulationsfehler vermieden oder zumindest reduziert.

## Patentansprüche

1. Vorrichtung zum Beschreiben von Darstellungsmaterial (3) mit
- einer Strahlungsquelle (1) zum Erzeugen einer elektromagnetischen Strahlung, die eine solche Wellenlänge hat, daß mit ihr Bildinformationen auf das Darstellungsmaterial (3) schreibbar sind, und
- einem in einem Substratmaterial (49) integrierten Wellenleiter, der als Modulator(2) zum Modulieren der von der Strahlungsquelle (1) erzeugten Strahlung ausgestaltet ist, wobei der Modulator (2) einen Eingang (9) aufweist, an dem ein Modulationssignal empfangbar ist, das die Bildinformationen enthält,
dadurch gekennzeichnet, daß
- die Vorrichtung weiterhin ein Kompensationsmittel (6, 12) zum Kompensieren eines bei dem Modulieren der Strahlung auftretenden Modulationsfehlers aufweist.

2. Vorrichtung nach Anspruch 1, dadurch gekennzeichnet, daß
- sie weiterhin ein erstes Erfassungsmittel (13) zum Erfassen eines Abbildes der modulierten Strahlung (5), die von dem Modulator (2) ausgegeben wird, und
- ein Erzeugungsmittel (15) aufweist, dem das erfaßte Abbild der modulierten Strahlung (5) zuführbar ist, und das so ausgestaltet ist, daß das zugeführte Abbild zum Feststellen des Modulationsfehlers mit einer Soll-Information verglichen und anschließend ein Modulationsfehlersignal in Abhängigkeit von dem festgestellten Modulationsfehler erzeugt wird, das dem Kompensationsmittel (12) zuführbar ist, wobei
- das Kompensationsmittel (12) den Modulationsfehler mittels des zugeführten Modulationsfehlersignals kompensiert.

3. Vorrichtung nach Anspruch 2, dadurch gekennzeichnet, daß das Kompensationsmittel (12) so ausgestaltet ist, daß zusätzlich zu dem Modulationsfehlersignal ein Bildsignal empfangbar ist, das die Bildinformationen enthält, die auf das Darstellungsmaterial (3) zu schreiben sind, und das Modulationssignal zum Modulieren der Strahlung mit dem Modulator (2) in Abhängigkeit von dem Bildsignal und dem Modulationsfehlersignal erzeugbar ist.

4. Vorrichtung nach Anspruch 2 oder 3, dadurch gekennzeichnet, daß die Soll-Information die auf das Darstellungsmaterial (3) zu schreibenden Bildinformationen enthält.

5. Vorrichtung nach einem der Ansprüche 2 - 4, dadurch gekennzeichnet, daß sie ein Auswertemittel (14) zum Auswerten der modulierten Strahlung (5) hinsichtlich ihrer spektralen Zusammensetzung aufweist.

6. Vorrichtung nach Anspruch 5, dadurch gekennzeichnet, daß das Auswertemittel (14) so ausgestaltet ist, daß es eine Auswertung des von dem ersten Erfassungsmittel (13) erfaßten Abbildes der modulierten Strahlung (5) durchführt.

7. Vorrichtung nach Anspruch 5 oder 6, dadurch gekennzeichnet, daß das Auswertemittel (14) in dem Substratmaterial (49) integriert ist.

8. Vorrichtung nach einem der Ansprüche 5 - 7, dadurch gekennzeichnet, daß das Erzeugungsmittel (15) so ausgestaltet ist, daß es das Modulationsfehlersignal weiterhin in Abhängigkeit von der spektralen Zusammensetzung der modulierten Strahlung (5) erzeugt.

9. Vorrichtung nach einem der vorhergehenden Ansprüche, dadurch gekennzeichnet, daß das Kompensationsmittel (6, 12) ein Temperaturstabilisierungsmittel (6) zum Stabilisieren der Temperatur des Modulators (2) aufweist.

10. Vorrichtung nach Anspruch 9, dadurch gekennzeichnet, daß das Temperaturstabilisierungsmittel (6) einen Eingang (7) zum Empfangen eines Ansteuersignales hat, mit dem eine Stabilisierungstemperatur für den Modulator (2) vorgebbar ist.

11. Vorrichtung nach Anspruch 10, dadurch gekennzeichnet, daß das Ansteuersignal in Abhängigkeit von niederfrequenten Bestandteilen der modulierten Strahlung (5) erzeugbar ist, die von dem Auswertemittel (14) ermittelt wurden und Modulationsfehler angeben, die auf unerwünschte, auf den Modulator (2) wirkende Temperatureinflüsse zurückzuführen sind.

12. Vorrichtung nach einem der vorhergehenden Ansprüche, dadurch gekennzeichnet, daß sie ein Sensormittel (11) zum Bestimmen der Temperatur des Modulators (2) aufweist.

13. Vorrichtung nach Anspruch 9 und 12, dadurch gekennzeichnet, daß das Ansteuersignal für das Temperaturstabilisierungsmittel (6) in Abhängigkeit von der bestimmten Temperatur erzeugbar ist.

14. Vorrichtung nach einem der Ansprüche 9 - 13, dadurch gekennzeichnet, daß das Temperaturstabilisierungsmittel (6) ein Peltier-Element ist.

15. Vorrichtung nach Anspruch 2 und 12, dadurch gekennzeichnet, daß das Sensormittel (11) mit dem Erzeugungsmittel (15) verbunden ist und das Modulationsfehlersignal durch das Erzeugungsmittel (15) in Abhängigkeit von der bestimmten Temperatur des Modulators (2) erzeugbar ist.

16. Vorrichtung nach einem der vorhergehenden Ansprüche, dadurch gekennzeichnet, daß sie ein zweites Erfassungsmittel (22) zum Erfassen eines Abbildes der nichtmodulierten Strahlung (4) aufweist.

17. Vorrichtung nach Anspruch 16, dadurch gekennzeichnet, daß sie ein Änderungsmittel (42) zum Ändern der dem Modulator (2) zuführbaren Strahlung in Abhängigkeit von dem erfaßten Abbild der nichtmodulierten Strahlung (4A) aufweist.

18. Vorrichtung nach Anspruch 17, dadurch gekennzeichnet, daß das Änderungsmittel (42) ein Polarisationsmittel zum Einstellen der Polarisation der dem Modulator (2) zuführbaren Strahlung aufweist.

19. Vorrichtung nach einem der Ansprüche 16 - 18, dadurch gekennzeichnet, daß das Kompensationsmittel (12) so ausgestaltet ist, daß das von dem zweiten Erfassungsmittel (22) erfaßte Abbild der nichtmodulierten Strahlung (4) zuführbar ist und das Modulationssignal zusätzlich in Abhängigkeit von diesem Abbild erzeugbar ist.

20. Vorrichtung nach einem der vorhergehenden Ansprüche, dadurch gekennzeichnet, daß die Wellenlänge der von der Strahlungsquelle (1) erzeugten Strahlung (4) im sichtbaren oder infraroten Bereich des Spektrums liegt.

21. Vorrichtung nach einem der vorhergehenden Ansprüche, dadurch gekennzeichnet, daß sie einen Farbmischer (24) zum Überlagern von wenigstens drei Strahlungen aufweist, wobei eine erste Strahlung im roten, eine zweite Strahlung im grünen und eine dritte Strahlung im blauen Wellenlängenbereich des sichtbaren Spektrums liegt.

22. Vorrichtung nach einem der Ansprüche 2 - 21, dadurch gekennzeichnet, daß das erste und/oder zweite Erfassungsmittel (13, 22) einen Fotodetektor (55) aufweist.

23. Vorrichtung nach einem der Ansprüche 2 - 21, dadurch gekennzeichnet, daß das erste und/oder zweite Erfassungsmittel (13, 22) einen im Substratmaterial (49) integrierten Strahlenteiler aufweist.

24. Vorrichtung nach einem der Ansprüche 2 - 21, dadurch gekennzeichnet, daß das erste und/oder zweite Erfassungsmittel (13, 22) einen im Substratmaterial (49) integrierten sogenannten Y-Koppler aufweist.

25. Vorrichtung nach einem der Ansprüche 2 - 21, dadurch gekennzeichnet, daß das erste und/oder zweite Erfassungsmittel (13, 22) über einen optischen Lichtwellenleiter an das Substratmaterial (49) gekoppelt ist.

26. Vorrichtung nach einem der Ansprüche 2 - 21, dadurch gekennzeichnet, daß das erste und/oder zweite Erfassungsmittel (13, 22) einen Spiegel (28 - 30) oder ein Prisma zum Auskoppeln eines Teils der modulierten Strahlung (5) aufweist.

27. Vorrichtung nach einem der vorhergehenden Ansprüche, dadurch gekennzeichnet, daß das Grundmaterial des Substratmaterials (49) Kaliumtitanylphosphat, KTiOPO₄, KTP, ist.

28. Vorrichtung nach einem der vorhergehenden Ansprüche, dadurch gekennzeichnet, daß der Modulator (2) ein sogenanntes Mach-Zehnder-lnterferometer ist.

29. Verfahren zum Beschreiben von Darstellungsmaterial (3) mit den folgenden Verfahrensschritten:
- Erzeugen einer elektromagnetischen Strahlung (4), die eine solche Wellenlänge hat, daß mit ihr Bildinformationen auf das Darstellungsmaterial (3) schreibbar sind, und
- Modulieren der von der Strahlungsquelle (1) erzeugten Strahlung (4) mit einem in einem Substratmaterial (49) integrierten Wellenleiter, der als Modulator (2) ausgestaltet ist und ein Modulationssignal empfängt, das die Bildinformationen enthält,
dadurch gekennzeichnet, daß
- ein bei dem Modulieren der Strahlung (4) auftretender Modulationsfehler kompensiert wird.

30. Verfahren nach Anspruch 29, dadurch gekennzeichnet, daß
- ein Abbild der modulierten Strahlung (5), die von dem Modulator (2) ausgegeben wird, erfaßt wird,
- der Modulationsfehler durch Vergleichen des erfaßten Abbildes der modulierten Strahlung (5) mit einer Soll-Information festgestellt und ein Modulationsfehlersignal in Abhängigkeit von dem festgestellten Modulationsfehler erzeugt wird, und
- der Modulationsfehler mittels des Modulationsfehlersignals kompensiert wird.

31. Verfahren nach Anspruch 30, dadurch gekennzeichnet, daß das Modulationssignal zum Modulieren der Strahlung (4) in Abhängigkeit von einem Bildsignal, das die Bildinformationen enthält, die auf das Darstellungsmaterial (3) zu schreiben sind, und dem Modulationsfehlersignal erzeugt wird.

32. Verfahren nach einem der Ansprüche 30 oder 31, dadurch gekennzeichnet, daß die modulierte Strahlung (5) hinsichtlich ihrer spektralen Zusammensetzung ausgewertet wird.

33. Verfahren nach einem der Ansprüche 29 - 32, dadurch gekennzeichnet, daß die Temperatur des Modulators (2) stabilisiert wird.

34. Verfahren nach Anspruch 33, dadurch gekennzeichnet, daß eine Stabilisierungstemperatur für den Modulator (2) vorgegeben wird.

35. Verfahren nach Anspruch 32 und 34, dadurch gekennzeichnet, daß die Stabilisierungstemperatur in Abhängigkeit von niederfrequenten Bestandteilen der modulierten Strahlung (5) erzeugt wird, die von dem Auswertemittel (14) ermittelt werden und Modulationsfehler angeben, die auf unerwünschte, bei der Modulation wirkende Temperatureinflüsse zurückzuführen sind.

36. Verfahren nach einem der Ansprüche 29 - 35, dadurch gekennzeichnet, daß die Temperatur des Modulators (2) bestimmt wird.

37. Verfahren nach Anspruch 36, dadurch gekennzeichnet, daß die Stabilisierungstemperatur in Abhängigkeit von der bestimmten Temperatur erzeugt wird.

38. Verfahren nach Anspruch 29 und 36, dadurch gekennzeichnet, daß das Modulationssignal in Abhängigkeit von der bestimmten Temperatur des Modulators (2) erzeugt wird.

39. Verfahren nach einem der Ansprüche 29 - 38, dadurch gekennzeichnet, daß ein Abbild der nichtmodulierten Strahlung (4) erfaßt wird.

40. Verfahren nach Anspruch 39, dadurch gekennzeichnet, daß die dem Modulator (2) zuführbare Strahlung (4A, 4B) in Abhängigkeit von diesem Abbild verändert wird.

41. Verfahren nach Anspruch 40, dadurch gekennzeichnet, daß die Polarisation der dem Modulator (2) zuführbaren Strahlung (4A, 4B) eingestellt wird.

42. Verfahren nach einem der Ansprüche 39 - 41, dadurch gekennzeichnet, daß das Modulationssignal in Abhängigkeit von dem Abbild der nichtmodulierten Strahlung (4A) erzeugt wird.
